# DEMANDE DE BREVET EUROPEEN

(11) **EP 0 628 455 A1**
(43) Date de publication de la demande: **14.12.1994**
(21) Numéro de dépôt: 94108533.4
(22) Date de dépôt: 03.06.1994
(51) Int. Cl.: B60R 25/02

(54) **Antivol de direction pour véhicule automobile**

(30) Priorité: 09.06.1993 FR 9306915
(71) Demandeur: VALEO SECURITE HABITACLE, 78290 Croissy-Sur-Seine (FR)
(72) Inventeur: Canard, Louis, F-58000 Nevers (FR)
(74) Mandataire: Gamonal, Didier

(57) **Abrégé**

Antivol de direction pour véhicule automobile comprenant un corps (10), une serrure solidaire d'une came de commande (14) apte, sous l'action d'une clé conforme, à entraîner une pièce de verrouillage (16) solidaire d'un pêne dans un mouvement de translation parallèle à l'axe de l'antivol d'une position de verrouillage à une position de déverrouillage, l'antivol comprenant en outre un palpeur de clé apte à déplacer radialement un coulisseau (22), un organe de blocage (26) de la pièce de verrouillage (16) pouvant pivoter sous l'action d'un ressort (52). L'organe de blocage (26) comporte, ménagés de matière, trois moyens d'articulation (40,46,50) répartis suivant une ligne globalement parallèle à l'axe de l'antivol.

## Description

La présente invention concerne d'une manière générale un antivol de direction pour véhicule automobile.

Elle concerne plus particulièrement un antivol comprenant une serrure à barillet équipée d'une came de commande et un pêne de verrouillage pour bloquer la colonne de direction du véhicule.

Ledit pêne est en général solidaire d'une pièce de verrouillage ou tirette pouvant coulisser sous l'action de la rotation de la came de commande par manoeuvre d'une clé conforme introduite dans le barillet de la serrure pour amener le pêne en position de déverrouillage.

La tirette et donc le pêne sont maintenus en position de déverrouillage, après retour de la came de commande dans sa position initiale par un organe de blocage ou levier de sécurité qui vient s'encliqueter dans la tirette et qui ne peut la libérer qu'après extraction complète de la clé, par l'intermédiaire d'un palpeur de clé et d'un coulisseau.

La conception d'un tel levier est toujours complexe car les différentes fonctions énumérées ci-dessus nécessitent une cinématique du levier autour d'au moins deux moyens d'articulation en particulier lorsque le déplacement de la tirette se fait coaxialement à l'axe de la serrure.

Ces moyens d'articulation nécessitent en général non seulement des pièces spécifiques mais également des usinages du corps de l'antivol et du levier de sécurité et le montage du levier dans l'antivol est une opération délicate et difficilement automatisable ce qui entraîne pour l'ensemble de l'antivol un surcoût inadmissible en particulier pour une fabrication en grande série comme c'est le cas dans le domaine automobile.

La présente invention résout ces problèmes et propose à cet effet un antivol de direction pour véhicule automobile comprenant un corps, une serrure solidaire d'une came de commande apte, sous l'action d'une clé conforme, à entraîner une pièce de verrouillage solidaire d'un pêne dans un mouvement de translation parallèle à l'axe de l'antivol d'une position de verrouillage à une position de déverrouillage, l'antivol comprenant en outre un palpeur de clé apte à déplacer radialement un coulisseau, un organe de blocage de la pièce de verrouillage pouvant pivoter sous l'action d'un ressort, et comportant, ménagés de matière, trois moyens d'articulation répartis suivant une ligne globalement parallèle à l'axe de l'antivol, caractérisé en ce que le premier moyen d'articulation de l'organe de blocage est constitué par une rotule formée à l'une de ses extrémités.

Selon d'autres caractéristiques de l'invention :
- la rotule est apte à coopérer avec un logement du coulisseau,
- le logement du coulisseau présente une entrée évasée,
- le second moyen d'articulation de l'organe de blocage est constitué par un axe central apte à se déplacer radialement lors du pivotement dudit organe de blocage et disposé entre les premier et troisième moyens d'articulation,
- le troisième moyen d'articulation de l'organe de blocage est constitué par un pion de verrouillage de l'organe de verrouillage situé de l'extrémité opposée du premier moyen d'articulation,
- l'organe de blocage présente une plage d'appui du ressort située entre les premier et second moyens d'articulation.

La présente invention sera mieux comprise à la lecture de la description qui va suivre en regard des dessins annexés dans lesquels :
- la figure 1 est une vue perspective avec arrachement partiel d'une partie de l'antivol selon l'invention dans une première position de fonctionnement;
- les figures 2 et 3 sont des vues identiques à la figure 1 pour des seconde et troisième positions de fonctionnement;
- la figure 4 est une vue en bout d'un coulisseau équipant l'antivol;
- la figure 5 est une vue en coupe suivant la ligne 5-5 de la figure 4;
- la figure 6 est une vue en plan d'un organe de blocage de l'antivol;
- la figure 7 est une vue latérale dudit organe de blocage.

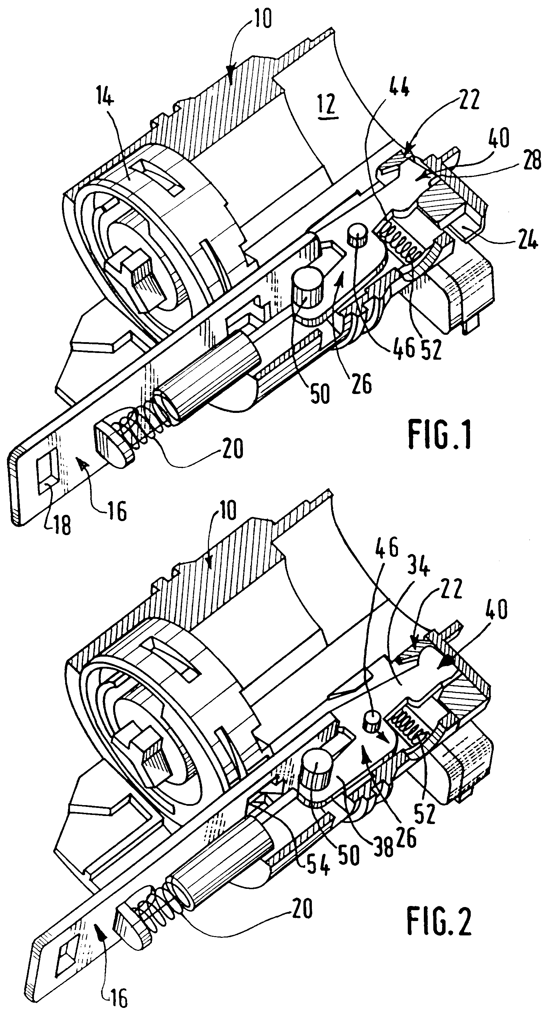

On se réfère tout d'abord à la figure 1 qui représente l'antivol en position de verrouillage, la clé n'étant pas introduite dans le barillet de la serrure.

L'ensemble des différents constituants de l'antivol est contenu dans un corps 10 dans lequel est ménagé un logement globalement cylindrique 12 destiné à recevoir une serrure (non représentée).

De manière connue en soi la serrure est équipée d'une came de commande 14 pouvant opérer un mouvement de rotation sous l'action de la manoeuvre d'une clé conforme introduite dans la serrure et apte à entraîner en translation une pièce de verrouillage ou tirette 16 par des moyens, qui ne faisant pas partie de la présente invention ne seront pas décrits ici plus en détail.

La tirette 16 comporte à l'une de ses extrémités un crevé 18 destiné à l'accrochage d'un pêne (non représenté) qui, en position de verrouillage, bloque en rotation la colonne de direction du véhicule.

La tirette 16 et donc le pêne sont rappelés en position de verrouillage par un ressort de verrouillage 20.

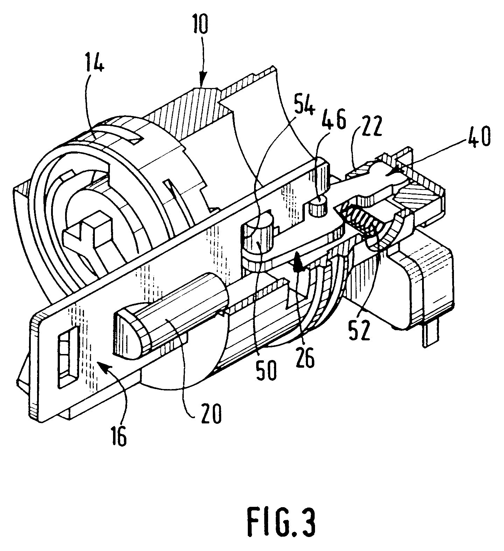

Sous l'action de la came de commande 14, la tirette 16 est entraînée dans un mouvement de translation parallèle à l'axe de l'antivol entre une position de verrouillage, représentée figures 1 et 2 et une position de déverrouillage représentée figure 3.

L'antivol comprend également un coulisseau 22 apte à se déplacer dans un logement radial 24 du corps de l'antivol 10 et un organe de blocage ou levier de sécurité 26 pouvant pivoter dans des conditions qui seront explicitées plus avant.

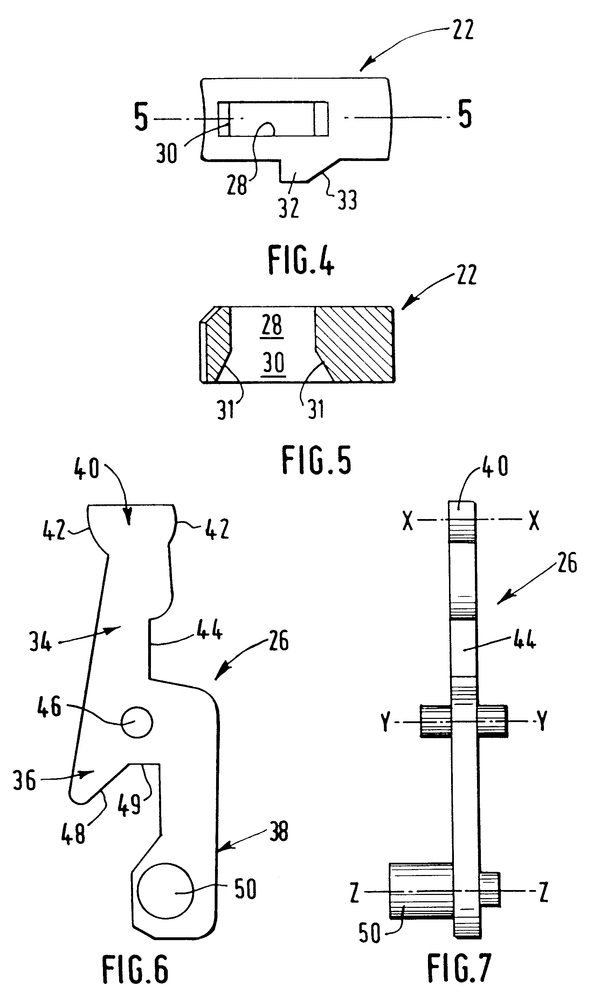

Ainsi qu'illustré sur les figures 4 et 5 le coulisseau 22 se présente sous une forme globalement parallélépipèdique avec une fente 28 de section rectangulaire et parallèle à l'axe de l'antivol. Cette fente 28 présente à l'une de ses extrémités débouchantes une entrée évasée 30 par deux chanfreins 31. Le coulisseau 22 comprend en outre sur sa face inférieure un pion 32 dont l'une des extrémités se raccorde à la face inférieure du coulisseau 22 par une fente 33.

Ainsi qu'illustré sur les figures 6 et 7 l'organe de blocage ou levier 26 est réalisé sous la forme d'une plaque prédécoupée et comporte une branche principale 34 se prolongeant par deux branches secondaires 36,38 de longueurs différentes.

La branche principale 34 présente à l'une de ses extrémités une rotule 40 constituée par deux flancs bombés 42 constituant un premier moyen d'articulation du levier 26 suivant un axe X-X. La branche principale 34 présente une encoche 44 formant plage d'appui. Dans la partie de raccordement des branches 34,36,38, le levier 26 comporte un axe central 46 faisant saillie par rapport à chacune de ses faces latérales et constituant un second moyen d'articulation dudit levier 26 suivant un axe Y-Y.

La branche secondaire 36 la plus courte se présente sous la forme d'un nez à extrémité arrondie et se raccorde à la branche secondaire 38 la plus longue par un pan incliné 48 et une face radiale 49.

La branche secondaire la plus longue 38 comporte à son extrémité un pion cylindrique 50 ou pion de verrouillage constituant un troisième moyen d'articulation du levier 26 suivant un axe Z-Z.

En se référant aux figures 1 à 3, le premier moyen d'articulation du levier 26 est constitué par la rotule 40 coopérant avec le logement 28 du coulisseau 22 et le second moyen d'articulation du levier 26 est constitué par l'axe central 46 dont l'une des saillies coopère avec un logement du corps 10 de l'antivol.

L'organe de blocage ou levier 26 comporte ainsi, ménagés de matière, trois moyens d'articulation 40,46,50 répartis suivant une ligne globalement parallèle à l'axe de l'antivol.

Un ressort de rappel 52 du levier 26 agit entre une paroi du corps 10 et l'encoche ou plage d'appui 44.

Le fonctionnement d'un tel antivol est le suivant:
Sur la figure 1, la clé n'étant pas introduite dans la serrure, le coulisseau 22 est en position haute grâce au ressort de rappel 52 et le pion de verrouillage 50 est en butée contre la tirette 16. La tirette 16 et donc le pêne associé sont maintenus en position de verrouillage par le ressort de verrouillage 20.

Lorsque l'on introduit la clé dans la serrure, figure 2, un palpeur de clé (non représenté) repousse radialement le coulisseau 22, le levier 26 pivote autour du pion de verrouillage 50 à l'encontre du ressort de rappel 52 ce qui provoque un déplacement radial vers l'extérieur de l'axe 46.

De ce fait l'action du ressort 52 a pour résultat de rappeler vers l'axe de la serrure non plus la branche 34 du levier 26 mais sa branche secondaire 38 et donc maintient le pion de verrouillage 50 en appui contre la tirette 16.

La rotation de la clé dans la serrure provoque une rotation de sa came de commande 14 et donc un coulissement axial de la tirette 16 à l'encontre du ressort de verrouillage 20 comme représenté figure 3.

La tirette 16 présente un crevé 54 de forme générale rectangulaire dans lequel vient pénétrer le pion de verrouillage 50 par une rotation du levier 26 autour de sa rotule 40 par l'action du ressort 52 ce qui amène le pêne en position de déverrouillage.

Au cours de cette rotation, l'axe central 46 opère un déplacement radial vers l'intérieur et reprend la position qu'il occupait avant introduction de la clé.

L'action du ressort 52 est à nouveau inversée et tend à ramener vers l'axe de la serrure la branche 34 du levier 26.

Lorsque l'on retire la clé de l'antivol, le palpeur de clé n'exerce plus d'effort sur le coulisseau 22, le ressort 52 fait pivoter le levier 26 autour de l'axe central 46 de manière à dégager le pion de verrouillage 50 de la tirette 16 de manière à permettre au pêne de prendre une position de verrouillage.

La présente invention ne se limite pas aux formes de réalisation décrites ou représentées mais englobe toute variante que l'homme de l'art pourrait y apporter.

En particulier le pion de verrouillage 50 constituant le troisième moyen d'articulation du levier 26 peut très bien être constitué par une extrémité du levier présentant un pan radial pour former un crochet sans pour cela sortir du cadre de l'invention.

## Revendications

1. Antivol de direction pour véhicule automobile comprenant un corps (10), une serrure solidaire d'une came de commande (14) apte, sous l'action d'une clé conforme, à entraîner une pièce de verrouillage (16) solidaire d'un pêne dans un mouvement de translation parallèle à l'axe de l'antivol d'une position de verrouillage à une position de déverrouillage, l'antivol comprenant en outre un palpeur de clé apte à déplacer radialement un coulisseau (22), un organe de blocage (26) de la pièce de verrouillage (16) pouvant pivoter sous l'action d'un ressort (52), et comportant, ménagés de matière, trois moyens d'articulation (40,46,50) répartis suivant une ligne globalement parallèle à l'axe de l'antivol, caractérisé en ce que le premier moyen d'articulation de l'organe de blocage (26) est constitué par une rotule (40) formée à l'une de ses extrémités.

2. Antivol selon la revendication 1, caractérisé en ce que la rotule (40) est apte à coopérer avec un logement (28) du coulisseau (22).

3. Antivol selon la revendication 2, caractérisé en ce que le logement (28) du coulisseau (22) présente une entrée évasée (30).

4. Antivol selon la revendication 1, caractérisé en ce que le second moyen d'articulation de l'organe de blocage (26) est constitué par un axe central (46) apte à se déplacer radialement lors du pivotement dudit organe de blocage et disposé entre les premier et troisième moyens d'articulation.

5. Antivol selon l'une des revendications 1 ou 4, caractérisé en ce que le troisième moyen d'articulation de l'organe de blocage (26) est constitué par un pion de verrouillage (50) de l'organe de verrouillage (16) situé de l'extrémité opposée du premier moyen d'articulation (40).

6. Antivol selon la revendication 5, caractérisé en ce que le pion de verrouillage (50) est de forme cylindrique.

7. Antivol selon la revendication 5, caractérisé en ce que le pion de verrouillage (50) est constitué par un crochet.

8. Antivol selon l'une des revendications précédentes, caractérisé en ce que l'organe de blocage (26) présente une plage d'appui (44) du ressort (52) située entre les premier (50) et second (46) moyens d'articulation.
